# EUROPEAN PATENT APPLICATION

(11) **EP 3 206 115 A1**
(43) Date of publication of application: **16.08.2017**
(21) Application number: 16766830.0
(22) Date of filing: 05.07.2016
(51) Int. Cl.: G06F 3/0481, G06F 3/0482, G06F 3/0486

(54) **METHOD AND APPARATUS FOR LIST ITEM OPERATIONS**

(30) Priority: 15.12.2015 CN 201510937982
(71) Applicant: LE Holdings (Beijing) Co., Ltd., Beijing 100025 (CN); Lemobile Information Technology (Beijing) Co., Ltd., Beijing 101300 (CN)
(72) Inventor: WANG, Ziming, Gaoliying Town Shunyi District Beijing 101300 (CN)
(74) Representative: Würmser, Julian
(86) International application number: PCT/CN2016/088600
(87) International publication number: WO 2017/101333

(57) **Abstract**

Provided are a method and an apparatus for processing a list item operation. The processing method includes: converting the list item into a floating display state based on a triggering instruction of a user on the list item; controlling a floating list item to move to a drag destination along a drag path based on a drag operating instruction of the user on the floating list item; and performing an editing operation corresponding to an editing icon on the floating list item upon detecting that the drag destination of the floating list item overlaps with the editing icon.

## Description

This application claims priority to Chinese Patent Application No. 201510937982.1, filed on December 15, 2015, entitled "method and apparatus for processing list item operation", which is incorporated herein by reference in its entirety.

### Technical Field

Embodiments of this application relate to technologies of operating an intelligent terminal, and in particular to a method and an apparatus for processing a list item operation.

### Technical Background

Intelligent terminals have already gone deeply and widely applied to people's daily life, and meanwhile, people's requirements on intelligent terminals become higher and higher. Taking operating modes of the intelligent terminal as an example, young users prefer fresh, intuitive and convenient operating modes, and therefore, innovation of operating modes is very important.

It is very essential to innovate operating modes of a list, because the list is the most common icon on a display interface of an intelligent terminal. The list is composed of multiple list items, and relevant operating modes of a list are as follows. An operating column for a list item is popped up when the list item in the list is long-pressed, and operations such as deletion, selection, duplication and sharing can be operated on the list item if the operating column is clicked.

In a process of implementing this application, the inventor finds at least following problems in the prior art: although relevant operating modes of a list can achieve relevant functions, a user needs to long press a list item and click an operating column to trigger functions, mis-operations are easily to occur, and each list item is constrained by a list, so that user experience is poor during operation.

### Summary

Embodiments of this application provide a method and an apparatus for processing a list item operation, which optimize operating modes of a list item.

In a first aspect, embodiments of this application provide a method for processing a list item operation, including:
converting the list item into a floating display state based on a triggering instruction on the list item;
controlling a floating list item to move to a drag destination along a drag path based on a drag operating instruction on the floating list item; and
performing an editing operation corresponding to an editing icon on the floating list item upon detecting that the drag destination of the floating list item overlaps with the editing icon.

In a second aspect, embodiments of this application further provide an apparatus for processing a list item operation, including:
a display state converting module, configured to convert the list item into a floating display state based on a triggering instruction of a user on the list item;
a list item moving module, configured to control a floating list item to move to a drag destination along a drag path based on a drag operating instruction of the user on the floating list item; and
an editing operation performing module, configured to perform an editing operation corresponding to an editing icon on the floating list item upon detecting that the drag destination of the floating list item overlaps with the editing icon.

In a third aspect, embodiments of this application further provide a non-transitory computer-readable storage medium storing executable instructions for performing any of above methods for processing a list item operation of this application. In a fourth aspect, embodiments of this application further provide an apparatus for processing a list item operation, including: at least one processor; and a memory; where a program executable by the at least one processor is stored in the memory, and the program is configured to perform any of above methods for processing a list item operation of this application.

In the method and the apparatus for processing the list item operation provided in this application, states of the triggered list item are converted, so that a display state of the triggered floating list item and a display state of a non-floating list item form a sharp contrast to facilitate a user to operate the floating list item accurately, and the floating list item is controlled to move in a floating manner on the screen with dragging of the user, therefore user experience is improved; the floating list item is dragged to an editing icon to perform editing operations on the floating list item, so that the user's operation becomes convenient, operational convenience is improved, and operating modes of the list item are optimized.

### Description of Drawings

FIG. 1 is a flowchart showing a method for processing a list item operation according to Embodiment 1 of this application;
FIG. 2 is a flowchart showing a method for processing a list item operation according to Embodiment 2 of this application;
FIG. 3 is a flowchart showing a method for processing a list item operation according to Embodiment 3 of this application;
FIG. 4 is a schematic diagram showing an apparatus for processing a list item operation according to Embodiment 4 of this application;
FIG. 5 is a schematic diagram showing an apparatus for processing a list item operation according to Embodiment 5 of this application; and
FIG. 6 is a schematic diagram showing a hardware structure of a device performing a method for processing a list item operation according to Embodiment 7 of this application.

### Detailed description of Embodiment

In order to make the purposes, technical solutions and advantages of the embodiments of this application clearer, the technical solutions in the embodiments of this application will be clearly and completely described hereinafter according to the drawings of this application. Obviously, those described here are not all but only a part of embodiments of this application.

### Embodiment 1

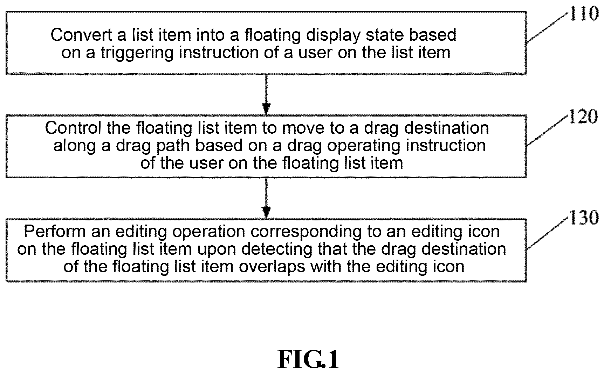

FIG. 1 is a flowchart showing a method for processing a list item operation according to Embodiment 1 of this application, technical solutions of this embodiment are applicable to a case of dragging a list item and operating on the list item, the method can be performed by an apparatus for processing a list item operation and configured in an intelligent terminal to apply.

The method for processing a list item operation according to Embodiment 1 of this application includes steps as follows.

In S110, a list item is converted into a floating display state based on a triggering instruction of a user on the list item.

As described above, after a user triggers the list item, a terminal converts the list item into a floating display state based on the triggering instruction of the user on the list item. The triggering of the user on the list item can be achieved by clicking of the user on the list item. After the list item is converted into the floating display state, the floating list item breaks through a relationship in which a list item is contained by a list, and is not constrained by the list any more, a non-floating list item is constrained by the list, and states of the floating list item and the non-floating list item form a sharp contrast, so that no mis-operation will occur, and such an operating mode is innovative.

In the above operation, the user triggers the list item needed to be processed to display it in a floating manner, so that the floating list item and the non-floating list item form a sharp contrast, and the user will not wrongly operate the non-floating list item when processing the floating list item, thereby reducing a probability of mis-operations.

In S120, the floating list item is controlled to move to a drag destination along a drag path based on a drag operating instruction of the user on the floating list item.

As described above, dragging of the user on the floating list item can be achieved by long pressing of the user on the floating list item so as to make it move. After a finger of the user presses the floating list item, the finger moves on a screen, then a moving path of the finger is the drag path of the floating list item pressed by the finger. After the floating list item moves along the drag path, when the finger stops and leaves the screen, the floating list item stays at the drag destination at the same time. It can be understood by those skilled in the art that dragging manners of a user on the floating list item include but are not limited to the manner described above.

In the above operation, after the user triggers to make the list item float, the user performs a drag operation on the floating list item, so that the list item can move in a floating manner on the screen with dragging of the finger, which facilitates operation of the user.

In S130, an editing operation corresponding to an editing icon on the floating list item is performed upon detecting that the drag destination of the floating list item overlaps with the editing icon.

As described above, when the drag destination of the floating list item overlaps with the editing icon, that is, the floating list item is dragged onto the editing icon, the terminal performs an operation on the floating list item based on a function corresponding to the editing icon. If the editing icon is a deletion icon, then the terminal performs a deletion operation on the floating list item. The editing icon also can have functions such as sharing, duplication, topping, forwarding and setting.

In the above operation, when the user needs to edit the floating list item, the user drags the floating list item onto a corresponding editing icon, then the terminal can achieve an editing operation on the floating list item, so that the operation becomes convenient.

On a basis of above technical solutions, to facilitate the user to perform an editing operation on the floating list item, the processing method may further include: displaying at least one editing icon on an interface of the list item based on a triggering instruction of the user on the list item. When the list item is converted into a floating display state, editing icons of the floating list item, such as a deletion icon, a sharing icon and a forwarding icon may also be displayed on an interface where the floating list item is located. The user can drag the floating list item onto corresponding editing icon, so as to achieve an editing operation on the floating list item.

In the method for processing the list item operation according to Embodiment 1 of this application, a list item is converted into a floating display state based on a triggering instruction of a user on the list item; a floating list item is controlled to move to a drag destination along a drag path based on a drag operating instruction of the user on the floating list item; and an editing operation corresponding to an editing icon on the floating list item is performed upon detecting that the drag destination of the floating list item overlaps with the editing icon; states of the triggered list item are converted, so that a display state of the triggered list item and a display state of a non-triggered list item form a sharp contrast to facilitate a user to operate the floating list item accurately; the floating list item is controlled to move in a floating manner on a screen with dragging of the user, so that user experience is improved; the floating list item is dragged to an editing icon to perform editing operations on the floating list item, so that the user's operation becomes convenient, operational convenience is improved, and operating modes of the list item are optimized.

### Embodiment 2

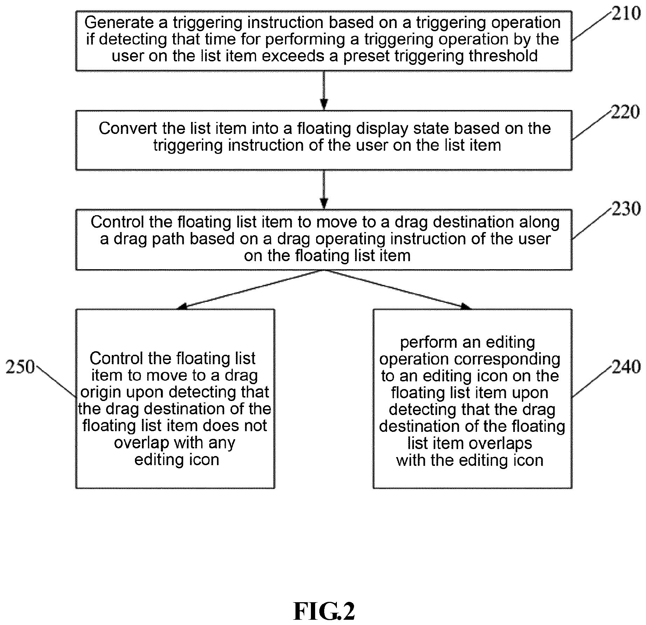

FIG. 2 is a flowchart showing a method for processing a list item operation according to Embodiment 2 of this application, technical solutions of this embodiment are applicable to a case of dragging a list item and operating on the list item, the method can be performed by an apparatus for processing a list item operation, and the apparatus for processing the list item operation can be configured in an intelligent terminal.

The method for processing a list item operation according to Embodiment 2 of this application includes steps as follows.

In S210, a triggering instruction is generated based on a triggering operation if detecting that time for performing a triggering operation by the user on the list item exceeds a preset triggering threshold.

As described above, to prevent the list item from being triggered and edited due to a mis-operation of the user, a triggering threshold is preset here. When the triggering operation by the user on the list item exceeds the preset triggering threshold, the terminal judges the triggering operation is valid and generates a triggering instruction, and controls the list item to float based on the triggering instruction; if the triggering operation by the user on the list item does not exceed the preset triggering threshold, the terminal judges the triggering operation is invalid, so that list item floating caused by a mis-operation of the user is avoided. When the triggering operation by the user is a single-click, the terminal judges the triggering operation is valid if contact time of the user to the screen exceeds the preset triggering threshold. When the triggering operation by the user is a double-click, the terminal judges the triggering operation is valid if interval time of the user between two clicks on the screen is within the preset triggering threshold; and the terminal judges the triggering operation is invalid if the interval time of the user between two clicks on the screen exceeds the preset triggering threshold.

In S220, the list item is converted into a floating display state based on the triggering instruction of the user on the list item.

In the above operation, the user triggers the list item needed to be processed to display the list item in a floating manner, so that a display state of the triggered floating list item and a display state of a non-floating list item form a sharp contrast, the user will not operate other non-floating list item wrongly when processing the floating list item, therefore a misoperation probability is reduced.

In S230, the floating list item is controlled to move to a drag destination along a drag path based on a drag operating instruction of the user on the floating list item; and

In the above operation, after the user triggers to make the list item float, the user performs a drag operation on the floating list item, so that the list item move in a floating manner on the screen with dragging of a finger, and the user's operation is more convenient.

In S240, an editing operation corresponding to an editing icon on the floating list item is performed upon detecting that the drag destination of the floating list item overlaps with the editing icon.

In the above operation, when the user needs to edit the floating list item, the user drags the floating list item onto a corresponding editing icon, so that the terminal can achieve an editing operation on the floating list item, and the operation becomes convenient.

After controlling the floating list item to move to the drag destination along the drag path based on the drag operating instruction by the user on the floating list item, the method for processing a list item operation can further include steps as follows. In S250, the floating list item is controlled to move to a drag origin upon detecting that the drag destination of the floating list item does not overlap with any editing icon.

As described above, when the drag destination of the floating list item does not overlap with any editing icon, it is indicated that the user does not need to edit the floating list item, then the terminal controls the floating list item to return to the drag origin. The terminal controls the floating list item to stay at the drag destination, then the user also can move and adjust a position of the floating list item. After completing an operation on the floating list item , the user can click an exit button, the terminal controls a current interface to return to a list interface, at this time, the list item triggered by the user has performed corresponding editing operations, such as deletion, sharing and forwarding.

The above embodiment has described operations to trigger and edit one list item, when the user needs to perform an editing operation on at least two list items, it can be achieved by a following manner including: converting at least two list items in a list into a selectable state based on a triggering instruction by the user on the list; and converting selected list items in the list into a floating display state based on an selecting operation input by the user. After the user triggers the list, the list items in the list are in a selectable state, and the user selects at least two list items needed to be processed. After the selection is completed, the selected list items are converted into a floating display state, and list items that are not selected are still contained in the list interface and constrained by the list. The user edits the selected list items through above step 230 to step S250.

If a same editing operation such as a deletion operation is performed on all the selected list items, then the user can select to drag and edit all the selected list items at the same time, or to drag and edit each list item in sequence. When at least two list items are converted to a floating display state simultaneously, only one group of editing icons is needed to be displayed on the interface of the list item, and the user can perform corresponding editing operations on all the floating list items based on one editing icon such as a deletion icon.

In the method for processing the list item operation according to Embodiment 2 of this application, a triggering instruction is generated based on a valid triggering operation, so that triggering of a list item caused by a mis-operation of the user is avoided; and then the list item is converted into a floating display state based on the triggering instruction, the floating list item is controlled to move to a drag destination along a drag path based on a drag operating instruction of the user on the floating list item upon detecting that the drag destination of the floating list item does not overlap with any editing icon, the floating list item is controlled to move to a drag origin, to facilitate the user to operate the floating list item accurately, so that user experience is improved, operations of the user become convenient, operational convenience is improved, and operating modes of the list item are optimized.

### Embodiment 3

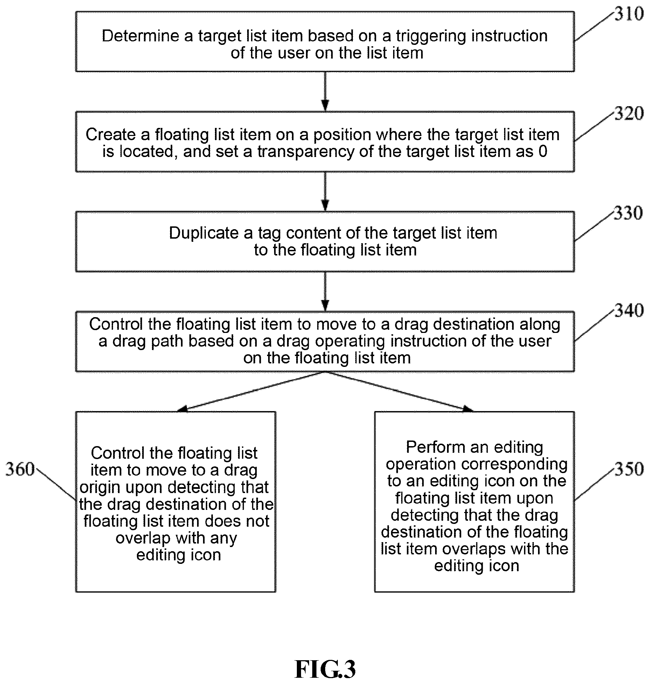

FIG. 3 is a flowchart showing a method for processing a list item operation according to Embodiment 3 of this application, technical solutions of this embodiment are applicable to a case of performing floating displaying, dragging and operating on the list item, the method can be performed by an apparatus for processing a list item operation, and the apparatus for processing the list item operation can be configured in an intelligent terminal.

The method for processing a list item operation according to Embodiment 3 of this application includes steps as follows.

In S310, a target list item is determined based on a triggering instruction of the user on the list item.

As described above, after the user triggers the list item, the terminal generates a triggering instruction of the user based on a valid triggering operation, determines and labels the list item triggered by the user as a target list item based on the triggering instruction. Here, the user can trigger multiple list items, and the terminal correspondingly determines multiple target list items.

In S320, a floating list item is created on a position where the target list item is located, and a transparency of the target list item is set as 0.

As described above, the user correspondingly creates the floating list item on the position where the target list item is located, and the floating list item displays in a floating manner. The transparency of the target list item is set as 0, namely, set as transparent. Here, it does not mean that the target list item disappears, but is hidden from the view of the user, and the user can only see the floating list item displayed in a floating manner on the position of the target list item.

In S330, a tag content of the target list item is duplicated to the floating list item.

As described above, the terminal duplicates the tag content of the target list item to the floating list item, then the floating list item entirely corresponds to the target list item, namely, the floating list item and the target list item are all the same in positions, contents and details. Each target list item corresponds to a respective floating list item, and the floating list item displays on the screen by replacing the target list item.

In S340, the floating list item is controlled to move to a drag destination along a drag path based on a drag operating instruction of the user on the floating list item.

In the above operation, after the user triggers to make the list item float, the user performs a drag operation on the floating list item, so that the list item moves in a floating manner on the screen with dragging of a finger, the user's operation becomes more convenient, and user experience is also improved. The floating list item corresponds to the target list item, however, drag operations of the user are only directed to the floating list item, and actually, a position of the target list item does not move with the finger.

In S350, an editing operation corresponding to an editing icon on the floating list item is performed upon detecting that the drag destination of the floating list item overlaps with the editing icon.

In the above operation, when the user needs to edit the floating list item, the user drags the floating list item onto a corresponding editing icon, and then the terminal can achieve an editing operation on the floating list item, and the operation becomes convenient. In fact, corresponding operations on the floating list item performed by the terminal are corresponding operations on the actual target list item performed by the terminal based on corresponding relationships between the floating list item and the target list item.

In S360, the floating list item is controlled to move to a drag origin upon detecting that the drag destination of the floating list item does not overlap with any editing icon.

In the above operation, after the terminal controls the floating list item to move to the drag origin, an original target list item remains at a position of an original file.

In the method for processing the list item operation according to Embodiment 3 of this application, determines the target list item based on the triggering instruction of the user on the list item, creates the floating list item on the position where the target list item is located, sets the transparency of the target list item as 0, and duplicates the tag content of the target list item to the floating list item so as to hide the target list item, and the floating list item moves along the drag path based on the drag operating instruction of the user. In this embodiment, the floating list item corresponding to the target list item is set, so that the list item triggered by the user is displayed on the screen in a floating manner, thereby facilitating the user to accurately operate on the list item, and operational convenience is improved.

### Embodiment 4

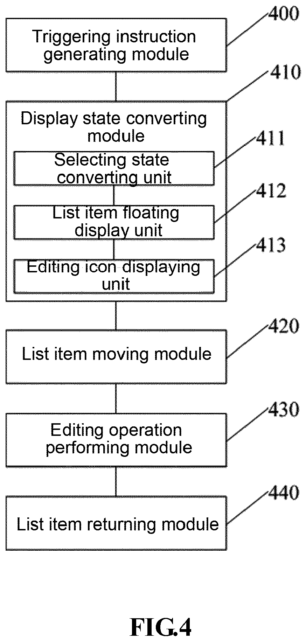

FIG. 4 is a schematic diagram showing an apparatus for processing a list item operation according to Embodiment 4 of this application, technical solutions of this embodiment are applicable to a case of performing floating displaying, dragging and operating on the list item, and the apparatus can perform any method for processing the list item operation according to any of the above embodiments, and can be configured in an intelligent terminal.

This embodiment provides an apparatus for processing a list item operation, which includes: a display state converting module 410, a list item moving module 420 and an editing operation performing module 430.

The display state converting module 410 is configured to convert a list item into a floating display state based on a triggering instruction of a user on the list item; the list item moving module 420 is configured to control a floating list item to move to a drag destination along a drag path based on a drag operating instruction of the user on the floating list item; and the editing operation performing module 430 is configured to perform an editing operation corresponding to an editing icon on the floating list item upon detecting that the drag destination of the floating list item overlaps with the editing icon.

Optionally, the processing apparatus further includes: a triggering instruction generating module 400.

The triggering instruction generating module 400 is configured to generate a triggering instruction based on the triggering operation if detecting that time for performing a triggering operation by the user on the list item exceeds a preset triggering threshold before converting the list item into the floating display state based on the triggering instruction by the user on the list item.

Optionally, the display state converting module 410 includes: a selecting state converting unit 411 and a list item floating display unit 412.

The selecting state converting unit 411 is configured to convert at least two list items in the list into a selectable state based on a triggering instruction by the user on the list; and the list item floating display unit 412 is configured to convert the selected list item in the list into a floating display state based on a selecting operation input by the user.

Optionally, the processing apparatus further includes: a list item returning module 440.

The list item returning module 440 is configured to control the floating list item to move to a drag origin upon detecting that the drag destination of the floating list item does not overlap with any editing icon after controlling the floating list item to move to the drag destination along the drag path.

Optionally, the display state converting module 410 further includes: an editing icon displaying unit 413.

The editing icon displaying unit 413 is configured to display at least one editing icon on an interface of the list item based on a triggering instruction of the user on the list item.

In the apparatus for processing the list item operation provided in Embodiment 4 of this application, by converting a state of a triggered list item, a display state of the triggered floating list item and a display state of a non-triggered list item form a sharp contrast to facilitate a user to operate the floating list item accurately; the floating list item is controlled to move in a floating manner on the screen with dragging of the user, so that user experience is improved; the floating list item is dragged to an editing icon to perform editing operations on the floating list item, so that the user's operation becomes convenient, operational convenience is improved, and operating modes of the list item are optimized.

### Embodiment 5

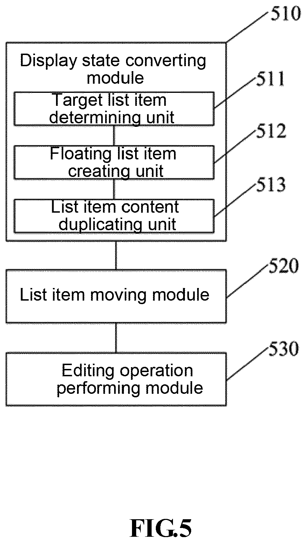

FIG. 5 is a schematic diagram showing an apparatus for processing a list item operation according to Embodiment 5 of this application, technical solutions of this embodiment are applicable to a case of performing floating displaying, dragging and operating on the list item, and the apparatus can perform any method for processing the list item operation according to any of the above embodiments, and can be configured in an intelligent terminal.

This embodiment provides an apparatus for processing a list item operation, which includes: a display state converting module 510, a list item moving module 520 and an editing operation performing module 530.

The display state converting module 510 is configured to convert the list item into a floating display state based on a triggering instruction of a user on the list item; the list item moving module 520 is configured to control a floating list item to move to a drag destination along a drag path based on a drag operating instruction of the user on the floating list item; and the editing operation performing module 530 is configured to perform an editing operation corresponding to an editing icon on the floating list item upon detecting that the drag destination of the floating list item overlaps with the editing icon.

Optionally, the display state converting module 510 includes: a target list item determining unit 511, a floating list item creating unit 512 and a list item content duplicating unit 513.

The target list item determining unit 511 is configured to determine a target list item based on a triggering instruction of the user on the list item; the floating list item creating unit 512 is configured to create a floating list item on a position where the target list item is located, and set a transparency of the target list item as 0; and the list item content duplicating unit 513 is configured to duplicate a tag content of the target list item to the floating list item.

In the apparatus, when the user long presses the list, the apparatus makes the list enter a multi selection mode by calling "ListView", and the user selects a list item needed to be processed. The apparatus displays editing buttons such as a deletion button and a sharing button on the floating interface by calling "Action Bar", and perform dragging by calling "Start Drag" in "View". When a finger touches a selected list item, the apparatus directly creates a floating list (Surface) on a position of the finger, and draws tag contents (Canvas) in one selected list item on the floating list (Surface), then the floating list (Surface) is a floating list item. The apparatus makes a window of the floating list item move with the finger by calling "Drag State". If the finger moves to any button in the "Action Bar", then the "Action Bar" judges to perform an editing function or make the floating list return to an initial creating position.

In this embodiment, a relationship between inclusion and exclusion of a list and a list item is broken through, so that a list item triggered by a user moves in a floating manner across a full screen along a drag path of the user, so that the user's operation and editing on the list item becomes convenient.

### Embodiment 6

Embodiments of this application provide a non-transitory computer storage medium in which computer executable instructions are stored, and the computer executable instructions can perform a method for processing a list item operation in any of above-described method embodiments.

### Embodiment 7

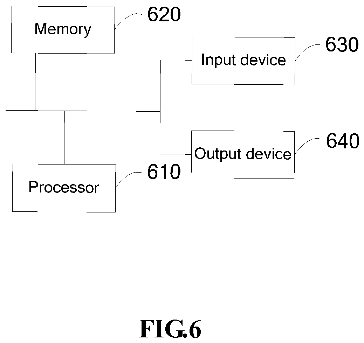

FIG. 6 is a schematic diagram showing a hardware structure of a device performing a method for processing a list item operation according to Embodiment 7 of this application, as shown in FIG. 6, the device includes:
at least one processor 610 and a memory 620, where one processor 610 is taken as an example in FIG. 6.

The device for performing the method for processing the list item operation may further include: an input device 630 and an output device 640.

The processor 610, the memory 620, the input device 630 and the output device 640 can be connected by means of a bus or by other means, and a bus connection is taken as an example in FIG. 6.

The memory 620, as a non-transitory computer-readable storage medium, can be configured to store a non-transitory software program, a non-transitory computer-executable program and module, such as program instructions/modules (for example, the display state converting module 410, the list item moving module 420 and the editing operation performing module 430 as shown in FIG. 4) corresponding to the method for processing the list item operation according to embodiments of this application. The processor 610 performs various functional applications and data processing in a server by running a non-transitory software program, instruction and module stored in the memory 620, that is, to implement the method for processing the list item operation according to the above method embodiments.

The memory 620 may include a storage program area and a storage data area, where the storage program area can store an operating system, and an application program required by at least one function; the storage data area can store data created by use of the apparatus for processing the list item operation and the like. In addition, the memory 620 may include a high-speed random access memory, or may further include a non-transitory memory such as at least one magnetic disk storage device, a flash memory device, or other non-transitory solid state storage device. In some embodiments, optionally, the memory 620 may include memories remotely located relative to the processor 610, and these remote memories can be connected to the apparatus for processing the list item operation through a network. Examples of the above network include but are not limited to an Internet, an intranet, a local area network, a mobile communication network, and any combination thereof.

The input device 630 can receive input number or character information, and generate key signal input associated with user settings and functional control of the apparatus for processing the list item operation. The output device 640 may include a display device such as a display screen.

The at least one module is stored in the above memory 620, when the at least one module is executed by the at least one processor 610, the at least one module executes the method for processing the list item operation according to any of the method embodiments.

The above product can perform the method provided in embodiments of this application, and have corresponding function modules and beneficial effects. Refer to the method provided in embodiments of this application for technical details, which are not described in detail in this embodiment.

### Industrial Applicability

In the method and the apparatus for processing the list item operation provided in embodiments of this application, states of the triggered list item are converted, so that a display state of the triggered floating list item and a display state of a non-floating list item form a sharp contrast to facilitate a user to operate the floating list item accurately, and the floating list item is controlled to move in a floating manner on the screen with dragging of the user, therefore user experience is improved; the floating list item is dragged to an editing icon to perform editing operations on the floating list item, so that the user's operation becomes convenient, operational convenience is improved, and operating modes of the list item are optimized.

## Claims

1. A method for processing a list item operation, comprising:
converting the list item into a floating display state based on a triggering instruction on the list item;
controlling a floating list item to move to a drag destination along a drag path based on a drag operating instruction on the floating list item; and
performing an editing operation corresponding to an editing icon on the floating list item upon detecting that the drag destination of the floating list item overlaps with the editing icon.

2. The method according to claim 1, wherein, before converting the list item into the floating display state based on the triggering instruction on the list item, further comprising:
generating the triggering instruction based on the triggering operation if detecting that time for performing a triggering operation on the list item exceeds a preset triggering threshold.

3. The method according to claim 1, wherein, converting the list item into the floating display state based on the triggering instruction on the list item, comprises:
converting at least two list items in the list into a selectable state based on the triggering instruction on the list; and
converting a selected list item in the list into a floating display state based on an input selecting operation.

4. The method according to claim 1, wherein, converting the list item into the floating display state based on the triggering instruction on the list item, comprises:
determining a target list item based on a triggering instruction on the list item;
creating a floating list item on a position where the target list item is located, and setting a transparency of the target list item as 0; and
duplicating a tag content of the target list item to the floating list item.

5. The method according to claim 1, wherein, after controlling the floating list item to move to the drag destination along the drag path based on the drag operating instruction on the floating list item, further comprising:
controlling the floating list item to move to a drag origin upon detecting that the drag destination of the floating list item does not overlap with any editing icon.

6. The method according to claim 1, wherein, converting the list item into the floating display state based on the triggering instruction on the list item, further comprises:
displaying at least one editing icon on an interface of the list item based on the triggering instruction on the list item.

7. An apparatus for processing a list item operation, comprising:
a display state converting module, configured to convert the list item into a floating display state based on a triggering instruction of a user on the list item;
a list item moving module, configured to control a floating list item to move to a drag destination along a drag path based on a drag operating instruction of the user on the floating list item; and
an editing operation performing module, configured to perform an editing operation corresponding to an editing icon on the floating list item upon detecting that the drag destination of the floating list item overlaps with the editing icon.

8. The apparatus according to claim 7, further comprising:
a triggering instruction generating module, configured to generate the triggering instruction based on the triggering operation if detecting that time for performing a triggering operation on the list item exceeds a preset triggering threshold, before converting the list item into the floating display state based on the triggering instruction on the list item.

9. The apparatus according to claim 7, wherein, the display state converting module comprises:
a selecting state converting unit, configured to convert at least two list items in the list into a selectable state based on the triggering instruction on the list; and
a list item floating display unit, configured to convert a selected list item in the list into a floating display state based on an input selecting operation.

10. The apparatus according to claim 7, wherein, the display state converting module comprises:
a target list item determining unit, configured to determine a target list item based on the triggering instruction on the list item;
a floating list item creating unit, configured to create a floating list item on a position where the target list item is located, and set a transparency of the target list item as 0; and
a list item content duplicating unit, configured to duplicate a tag content of the target list item to the floating list item.

11. The apparatus according to claim 7, further comprising:
a list item returning module, configured to control the floating list item to move to a drag origin upon detecting that the drag destination of the floating list item does not overlap with any editing icon after controlling the floating list item to move to the drag destination along the drag path.

12. The apparatus according to claim 7, wherein, the display state converting module further comprises:
an editing icon displaying unit, configured to display at least one editing icon on an interface of the list item based on the triggering instruction on the list item.

13. A non-transitory computer-readable storage medium storing executable instructions for performing the method according to any of claims 1 to 6.

14. An apparatus for processing a list item operation, comprising:
at least one processor; and
a memory; wherein
a program executable by the at least one processor is stored in the memory, and the program is configured to perform the method according to any of claims 1 to 6.
